# EUROPÄISCHE PATENTSCHRIFT

(11) **EP 2 987 769 B1**
(45) Veröffentlichungstag und Bekanntmachung des Hinweises auf die Patenterteilung: **05.02.2020**
(21) Anmeldenummer: 14002871.3
(22) Anmeldetag: 19.08.2014
(51) Int. Cl.: C01B 3/24, C01B 32/40, C01B 3/28, C10J 3/20

(54) **Verfahren zur Erzeugung von Synthesegas und elektrischer Energie**
Method for the production of synthesis gas and of electrical energy
Procédé de fabrication de gaz de synthèse et d'énergie électrique

(43) Veröffentlichungstag der Anmeldung: 24.02.2016
(73) Patentinhaber: BASF SE, 67056 Ludwigshafen am Rhein (DE)
(72) Erfinder: Maaß, Hans-Jürgen, 01328 Dresden (DE); Machhammer, Otto, 68163 Mannheim (DE); Bode, Andreas, 68163 Mannheim (DE); Kolios, Grigorios, 67435 Neustadt (DE)
(74) Vertreter: BASF IP Association

(56) Entgegenhaltungen:
- WO-A1-2014/097142
- DE-A1-102011 106 642
- DE-A1-102011 106 645
- DE-A1-102013 021 418
- US-A1- 2012 241 676
- HAGHIGHI ET AL: "On the reaction mechanism of CO2 reforming of methane over a bed of coal char", PROCEEDINGS OF THE COMBUSTION INSTITUTE, ELSEVIER, NL, Bd. 31, Nr. 2, 28. Dezember 2006 (2006-12-28), Seiten 1983-1990, XP005817861, ISSN: 1540-7489, DOI: 10.1016/J.PROCI.2006.07.029

## Beschreibung

Die Erfindung betrifft ein Verfahren zur Erzeugung von Synthesegas, bei dem aus Kohlenwasserstoff durch thermische Zersetzung Kohlenstoff und Wasserstoff erhalten werden, wobei zumindest ein Teil des erhaltenen Kohlenstoffs oxidiert und zumindest ein Teil des erhaltenen Wasserstoffs mit Kohlendioxid durch Reverse Wassergas-Shift zu Kohlenmonoxid und Wasser umgesetzt wird, wobei durch die thermische Kohlenwasserstoffzersetzung erhaltener Kohlenstoff in einem Kraftwerksprozess als Brennstoff verwendet wird, um elektrischen Strom zu produzieren, und bei der Verbrennung des Kohlenstoffs entstehendes Kohlendioxid in der Reversen Wassergas-Shift eingesetzt wird, wobei das in der Reversen Wassergas-Shift erzeugte Synthesegas zu Methanol und/oder Dimethylether und/oder Kohlenwasserstoffen umgesetzt wird und die bei der Umsetzung von Synthesegas anfallende Abwärme bei der Aufbereitung von Kohlendioxid für die Reverse Wassergas-Shift eingesetzt wird.

Unter Synthesegas ist ein Wasserstoff und Kohlenmonoxid enthaltendes Gasgemisch zu verstehen, das in einer Vielzahl von industriellen Prozessen als Basischemikalie eingesetzt werden kann. Abhängig von ihrer Verwendung weisen Synthesegase unterschiedlichen Verhältnisse von Wasserstoff zu Kohlenmonoxid auf.

Ein Verfahren der gattungsgemäßen Art ist aus der Internationalen Patentanmeldung WO2014/097142 bekannt, in der vorgeschlagen wird, den in einer ersten Reaktionszone gebildeten Wasserstoff mit einer zwischen 800 und 1400°C liegenden Temperatur in eine zweite Reaktionszone zu leiten, um seinen Wärmeinhalt für die Umsetzung von Wasserstoff und Kohlendioxid durch Reverse Wassergas-Shift zu Wasser und Kohlenmonoxid zu nutzen. Die Anmeldung sieht vor, den bei der Kohlenwasserstoffzersetzung erhaltenen Kohlenstoff als Produkt abzugeben, das beispielsweise im Hüttenwesen als Einblaskohle, Kokskohlenzusatzstoff oder Hochofenkoks eingesetzt und dabei oxidiert wird. Das Verfahren erlaubt es, Synthesegas weitgehend ohne Freisetzung von klimaschädlichem Kohlendioxid in die Atmosphäre zu erzeugen, da sich bei der Bereitstellung der Reaktionswärmen entstehendes und als Einsatzstoff zugeführtes Kohlendioxid in etwa die Waage halten. Wegen der großen Anzahl und Menge von schwer abtrennbaren Stoffen in den bei dem vorgeschlagenen Einsatz des Kohlenstoffs entstehenden Gasgemischen kann das Kohlendioxid nur mit erheblichen Schwierigkeiten und unter hohen Kosten in einer Form gewonnen werden, die seine stoffliche Verwertung oder Sequestrierung erlauben würde. Deshalb gelangt Kohlendioxid spätestens dann in die Atmosphäre, wenn das Kohlenstoffprodukt wie vorgeschlagen im Hüttenwesen verwendet wird.

In DE10 2013 021 418 wird ein mehrstufiges Verfahren zur kohlendioxid-armen Energiegewinnung unter Verwendung von sog. Überschussstrom beschrieben. In einer ersten Stufe wird in einer thermischen Kohlenwasserstoffzersetzung Kohlenstoff und Wasserstoff erzeugt. Der Kohlenstoff kann als Energiespeicher gelagert werden und im Bedarfsfall in einer zweiten Stufe in einer Vergasungs- und/oder in einer Verbrennungsreaktion umgesetzt werden. Das in der Verbrennungsreaktion erzeugte Kohlendioxid kann in einer dritten Stufe mit dem in der ersten Stufe erzeugten Wasserstoff zu Methan umgesetzt werden, wobei die Reaktionswärme der Methanisierungs-Reaktion für die Stromerzeugung genutzt werden kann.

US 2012/0241676 offenbart ein Verfahren zur Erzeugung von Synthesegas mit Hilfe einer Vergasungsreaktion und im zweiten Schritt einer thermischen Zersetzung der erhaltenden Kohlenwasserstoffe sowie einer nachfolgenden Reserve Wassergas-Shift Reaktion, zur Umsetzung von Kohlendioxid und Wasserstoff zu Kohlenmonoxid und Wasser. Der in der thermischen Zersetzung gewonnene Kohlenstoff wird entweder als Edukt für die Umwandlung von Kohlendioxid in Kohlenmonoxid verwendet oder als Brennstoff, um die benötigte Wärme für die anfängliche Vergasungsreaktion bereitzustellen.

Aufgabe der vorliegenden Erfindung ist es, ein Verfahren der gattungsgemäßen Art anzugeben, durch das die Nachteile des Standes der Technik überwunden werden können und das insbesondere die Erzeugung von Synthesegas ohne oder zumindest mit einer deutlich geringeren als nach dem Stand der Technik möglichen Freisetzung von Kohlendioxid in die Atmosphäre erlaubt.

Diese Aufgabe wird dadurch gelöst, dass durch die thermische Kohlenwasserstoffzersetzung erhaltener Kohlenstoff in einem Kraftwerksprozess als Brennstoff verwendet wird, um elektrischen Strom zu produzieren, und bei der Verbrennung des Kohlenstoffs entstehendes Kohlendioxid in der Reversen Wassergas-Shift eingesetzt wird, wobei das in der Reversen Wassergas-Shift erzeugte Synthesegas zu Methanol und/oder Dimethylether und/oder Kohlenwasserstoffen umgesetzt wird und die bei der Umsetzung von Synthesegas anfallende Abwärme bei der Aufbereitung von Kohlendioxid für die Reverse Wassergas-Shift eingesetzt wird.

Bei der Durchführung des erfindungsgemäßen Verfahrens wird der bei der Kohlenwasserstoffzersetzung erhaltene Kohlenstoff beispielsweise im Brennraum des Kessels eines Stein- oder Braunkohlekraftwerks bei den für derartige Kraftwerke typischen Drücken und Temperaturen verfeuert, um Hochdruckdampf zu erzeugen, der nachfolgend in einer mit einem Stromgenerator gekoppelten Turbine entspannt wird. Um einen ggf. höheren Brennwert des erfindungsgemäß erzeugten Kohlenstoffs gegenüber Stein- oder Braunkohle auszugleichen, wird vorgeschlagen, Kohlendioxid aus dem bei der Kohlenstoffverbrennung erhaltenen Kohlendioxid enthaltenden Gasgemisch abzutrennen und in den Brennraum zurückzuführen.

Je nachdem, ob der durch thermische Kohlenwasserstoffzersetzung erhaltene Kohlenstoff alleine oder gemeinsam mit einem anderen Brennstoff, wie beispielsweise Stein- oder Braunkohle, verbrannt wird, entsteht ein kohlendioxidhaltiges Gasgemisch mit einem mehr oder weniger großen Anteil an Stoffen, wie etwa Schwefelverbindungen, die den Ablauf der Reversen Wassergas-Shift ungünstig beeinflussen oder die das erzeugte Synthesegas verunreinigen würden. Es gilt daher, diese Stoffe von dem kohlendioxidhaltigen Gasgemisch abzutrennen, um das erhaltene Kohlendioxid in der Reversen Wassergas-Shift einsetzten zu können. Vorzugsweise wird das kohlendioxidhaltige Gasgemisch zu diesem Zweck einer chemischen und/oder physikalischen Gaswäsche unterzogen wie sie aus dem Stand der Technik bekannt ist. Zu nennen ist hier vor allem die Aminwäsche, in der bevorzugt Ethanolamin-Derivate als Waschmittel eingesetzt wird. Falls für die Kohlenstoffgewinnung ausschließlich ein schwefelfreier, kohlenwasserstoffhaltiger Einsatzstoff, wie beispielsweise entschwefeltes Erdgas, eingesetzt wird, weist auch der gewonnene Kohlenstoff keinen oder doch nur sehr geringe Schwefelmengen auf, so dass ein praktisch schwefelfreies kohlendioxidhaltiges Gasgemisch bei der Verfeuerung erhalten und auf eine Entschwefelungsstufe in der Gaswäsche verzichtet werden kann. Wird ein derartiger Kohlenstoff in einem Oxyfuel-Verfahren mit einem aus Sauerstoff und Kohlenmonoxid bestehenden Oxidationsmittel verbrannt, so besteht das entstehende Rauchgas praktisch ausschließlich aus Kohlendioxid, so dass auf eine Gaswäsche ggf. ganz verzichtet werden kann.

Das erfindungsgemäße Verfahren ermöglicht eine Synthesegaserzeugung, bei der Kohlendioxid im Kreislauf geführt und nicht in die Atmosphäre abgegeben wird. Abhängig insbesondere von der Art und Weise der Bereitstellung der benötigten thermischen Energie kann die Gesamtmenge des produzierten Kohlendioxids wieder im Prozess verbraucht werden. Überschüssiges Kohlendioxid kann als Kohlenstoffquelle für andere kohlenstoffverbrauchende Prozesse bereitgestellt werden. Vorstellbar ist es auch, das Verfahren so zu betreiben, dass mehr Kohlendioxid verbraucht als erzeugt wird. In diesem Fall muss Kohlendioxid von außerhalb zugeführt werden, wodurch der Prozess als Kohlendioxidsenke wirkt.

Der Kohlenwasserstoff, bei dem es sich beispielsweise um Methan, Ethan, Propan oder Butan handelt, wird der Kohlenwasserstoffzersetzung vorteilhaft in Form eines kohlenwasserstoffhaltigen Gases zugeführt. Vorzugsweise wird als kohlenwasserstoffhaltiges Gas Erdgas verwendet, dessen Methangehalt in Abhängigkeit von der Erdgaslagerstätte und der Art der Aufbereitung typischerweise zwischen 75 und 99mol% liegt.

Die erfindungsgemäße Synthesegaserzeugung kann drucklos oder unter Druck durchgeführt werden. Vorzugsweise erfolgt sie bei Drücken zwischen 10 und 25bar, besonders bevorzugt - bis auf Druckverluste - bei dem höchsten Druck, unter dem ein Kohlenwasserstoffe enthaltender Einsatz für die Kohlenstoffgewinnung zur Verfügung steht. Dies kann beispielsweise der Druck sein, unter dem Erdgas aus einem Erdgasnetz als Einsatz bezogen werden kann.

Für die erfindungsgemäße Synthesegaserzeugung benötigte thermische Energie kann beispielsweise durch Oxidation oder partielle Oxidation eines Brennstoffs erzeugt werden, der Kohlenwasserstoffe und/oder Wasserstoff umfasst. Als Oxidationsmittel werden vorzugsweise Luft und/oder mit Sauerstoff angereicherte Luft und/oder technisch reiner Sauerstoff verwendet. Oxidation und partielle Oxidation können außerhalb einer Reaktionszone durchgeführt werden, in der die thermische Kohlenwasserstoffzersetzung und/oder die Reverse Wassergas-Shift durchgeführt werden, wozu der Brennstoff mit einem Oxidationsmittel gemischt und zur Reaktion gebracht wird. Das dabei entstehende heiße Gas wird nachfolgend in die Reaktionszone eingeleitet, wobei es einen Teil seiner fühlbaren Wärme direkt oder indirekt an die umzusetzenden Stoffe abgibt. Das Oxidationsmittel kann jedoch auch in die Reaktionszone eingeleitet, dort mit einem vorliegenden Brennstoff, bei dem es sich um durch die Kohlenwasserstoffzersetzung erhaltenen Wasserstoff handeln kann, vermischt und zur Reaktion gebracht werden.

Alternativ oder zusätzlich zu den beschriebenen oxidativen Methoden kann thermische Energie auch über elektrischen Strom erzeugt und für die erfindungsgemäße Synthesegaserzeugung bereitgestellt werden. Hierzu können beispielsweise ein oder mehrere elektrisch leitfähige Heizelemente so in einer Reaktionszone angeordnet sein, dass sie mit den umzusetzenden Stoffen direkt oder indirekt in thermische Verbindung treten. Ein elektrisch leitfähiges Heizelement ist entweder fest oder beweglich innerhalb der Reaktionszone angeordnet. Beispielsweise kann das Heizelement Teil eines Wander- oder Wirbelbetts aus einem granularen, elektrisch leitfähigen Feststoff, bei dem es sich beispielsweise um Kohlenstoff handelt, sein, das durch die Reaktionszone bewegt wird.

Um es zu erhitzen, wird ein elektrisch leitfähiges Heizelement mit einer Stromquelle verbunden, über die elektrischer Strom durch das Heizelement geleitet wird. Möglich ist es aber auch, Wärme durch elektromagnetische Induktion zu erzeugen. Hierzu wird außerhalb der beiden Reaktionszonen eine Induktionsspule angeordnet, die ein magnetisches Wechselfeld liefert, sobald eine elektrische Wechselspannung an sie angelegt wird. Ein elektrisch leitfähiges Heizelement, das von der Induktionsspule elektrisch isoliert ist, wird so angeordnet, dass in ihm durch das magnetische Wechselfeld Wirbelströme induziert werden können, die aufgrund der ohmschen Verluste zur Erwärmung des Heizelements führen. Besteht das Heizelement aus einem ferromagnetischen Material, wie beispielsweise einer Eisen-Silizium- oder einer Eisen-Nickel-Legierung oder µ-Metall, so tragen darüber hinaus Ummagnetisierungsverluste zur Erwärmung des Heizelements und damit zur Ausbildung eines Temperaturgradienten zwischen einem Heizelement und seiner Umgebung bei.

Eine bevorzugte Variante des erfindungsgemäßen Verfahrens sieht vor, Strom, der unter Verwendung von durch thermische Kohlenwasserstoffzersetzung erhaltenem Kohlenstoff gewonnen wird, dazu zu verwenden, um thermische Energie für die Synthesegaserzeugung bereitzustellen. Dieses Vorgehen wird sinnvollerweise jedoch nur dann angewendet, wenn der Strom nicht oder nur zu ungünstigen Konditionen ins öffentliche Stromnetz abgegeben werden kann, so dass die für die Synthesegaserzeugung zur Verfügung stehende Strommenge starken zeitlichen Schwankungen unterworfen ist. Thermische Energie wird daher auch auf anderem, insbesondere auf oxidativem Wege erzeugt und der Synthesegaserzeugung so mit zeitlich schwankender Leistung zugeführt, dass die für die Umsetzung des Kohlenwasserstoffs insgesamt zur Verfügung stehende thermische Leistung stets einem Sollwert entspricht oder diesem angenähert ist. Durch diese Verfahrensvariante ist es möglich, sowohl die Synthesegaserzeugung als auch den Kraftwerksprozess stets unter optimalen Bedingungen mit einer Leistung in der Nähe der jeweiligen Nennleistung zu betreiben und trotzdem den erzeugten Strom flexibel und mit hoher Wertschöpfung in das öffentliche Netz abzugeben.

Abhängigkeit von der Art wie die für die Synthesegaserzeugung benötigte thermische Energie bereitgestellt wird, ergeben sich unterschiedliche Stoffbilanzen. Um aber sowohl die thermische Kohlenstoffzersetzung als auch die Oxidation des Kohlenstoffs und die Wäsche des dabei erzeugten kohlendioxidhaltigen Gasgemisches stets unter gleichbleibenden Bedingungen betreiben zu können, wird vorgeschlagen, temporär nicht im Prozess verwertbaren Kohlenstoff und nicht verwertbares Kohlendioxid zwischenzuspeichern und bei Bedarf dem Prozess wieder zuzuführen. Vorzugsweise wird Kohlendioxid hierbei in flüssiger Form zwischengespeichert.

Weiterhin wird vorgeschlagen, nicht nur temporär sondern dauerhaft nicht im Prozess verwertbaren Kohlenstoff als Rohstoffe an Verbraucher abzugeben. Beispielsweise kann der Kohlenstoff im Hüttenwesen als Einblaskohle, Kokskohlenzusatzstoff oder Hochofenkoks eingesetzt werden.

Das Synthesegas wird zu einem Wertstoff, wie beispielsweise Methanol und/oder Dimethylether und/oder Kohlenwasserstoffen, umgesetzt. Dabei wird der jeweilige Umsetzungsschritt energetisch in das Gesamtverfahren integriert. Wird das Synthesegas z.B. nach dem Fisher-Tropsch-Verfahren zu Kohlenwasserstoffen umgewandelt, wird die hierbei anfallende Abwärme dazu verwendet werden, um eine chemische Wäsche zu beheizen, in der das bei der Kohlenstoffverbrennung anfallende kohlendioxidhaltige Gasgemisch aufbereitet wird, um Kohlendioxid für die Reverse Wassergas-Shift zu erhalten. Zusätzlich kann die Abwärme auch zur Erzeugung von Dampf eingesetzt werden der beispielsweise im Kraftwerksprozess zur Stromproduktion genutzt wird.

Ein bei der Umsetzung des Synthesegases anfallender, Kohlenwasserstoffe enthaltender Stoffstrom, wie etwa das Abgas eines Fischer-Tropsch-Prozesses, wird vorzugsweise zurückgeführt und ggf. nach einem Reinigungsschritt der thermischen Kohlenwasserstoffzersetzung zugeführt.

Gegenüber dem Stand der Technik ermöglicht es das erfindungsgemäße Verfahren, Produkte aus Synthesegas mit einer wesentlich geringeren "Kohlendioxid-Fußabdruck" zu erzeugen, der die Gesamtmenge des direkt oder indirekt, etwa bei der Gewinnung, der Aufbereitung und dem Transport der eingesetzten Kohlenwasserstoffe, beim Produktionsprozess in die Atmosphäre freigesetzten Kohlendioxids angibt. So verringert sich der Fußabdruck beispielsweise bei der Erzeugung von Fischer-Tropsch-Produkten aus Erdgas von 4 auf weniger als 2t_{CO2}/t.

Das erfindungsgemäße Verfahren weiterbildend wird vorgeschlagen, dass die thermische Kohlenwasserstoffzersetzung in einer ersten Reaktionszone durchgeführt und dabei entstehender Wasserstoff aus der ersten Reaktionszone in eine zweite Reaktionszone geleitet wird, um dort mit Kohlendioxid durch Reverse Wassergas-Shift zu Wasser und Kohlenmonoxid umgesetzt zu werden. Vorzugsweise wird hierbei für die thermische Kohlenwasserstoffzersetzung benötigte Energie der ersten Reaktionszone aus der zweiten Reaktionszone zugeführt.

Hierdurch ist es möglich, die in der ersten Reaktionszone ablaufende thermische Kohlenwasserstoffzersetzung weitgehend unabhängig von anderen Reaktionen durchzuführen und damit vergleichsweise einfach und gut zu kontrollieren. In erster Linie über die Temperatur kann beispielsweise das Verhältnis von zersetztem zu nicht zersetztem Kohlenwasserstoff eingestellt und damit vor allem die Menge des in der ersten Reaktionszone erzeugten Wasserstoffs gesteuert werden. So wird bei einer Temperatur von ca. 800°C nur etwa die Hälfte des eingesetzten Kohlenwasserstoffs zersetzt, während bei ca. 1200°C ein Vollumsatz stattfindet.

Um Wasserstoff mit Kohlendioxid durch Reverse Wassergas-Shift in Wasser und Kohlenmonoxid umzusetzen, sind generell höhere Temperaturen notwendig als für die thermische Kohlenwasserstoffzersetzung, so dass zwischen der zweiten und der ersten Reaktionszone ein Temperaturgefälle eingestellt werden kann, das zweckmäßigerweise dazu genutzt wird, um der ersten Reaktionszone für die thermische Kohlenwasserstoffzersetzung benötigte Energie in Form von Wärme zuzuführen. Vorzugsweise wird der ersten Reaktionszone die gesamte für die thermische Kohlenwasserstoffzersetzung benötigte Energie aus der zweiten Reaktionszone zugeführt.

Abhängig von den Reaktionsbedingungen wird bei der Durchführung des erfindungsgemäßen Verfahrens nur ein Teil des Kohlenwasserstoffs in der ersten Reaktionszone zu Wasserstoff und Kohlenstoff zersetzt, wodurch nicht oder nicht vollständig zersetzter Kohlenwasserstoff aus der ersten Reaktionszone abgezogen werden kann. Eine besonders bevorzugte Ausgestaltung des erfindungsgemäßen Verfahrens sieht vor, nicht oder nicht vollständig zersetzten Kohlenwasserstoff aus der ersten in die zweite Reaktionszone zu leiten und dort durch Dampfreformierung mit Wasser zu Wasserstoff und Kohlendioxid umzusetzen. Zweckmäßigerweise handelt es sich bei dem für die Umsetzung benötigten Wasser um Wasser, das in der zweiten Reaktionszone durch die Reaktion von Wasserstoff mit Sauerstoff und/oder Kohlendioxid gewonnen wird. Eine Wasserzuführung von außerhalb soll jedoch nicht ausgeschlossen sein.

Eine zweckmäßige Ausgestaltung des erfindungsgemäßen Verfahrens sieht vor, dass die thermische Kohlenwasserstoffzersetzung in Gegenwart eines granularen Feststoffs durchgeführt wird. Unter dieser Bedingung stellt in der ersten Reaktionszone gebildeter Kohlenstoff kein Problem dar, da er sich auf dem granularen Feststoff ablagert und gegebenenfalls gemeinsam mit diesem aus der ersten Reaktionszone entfernt werden kann. Der granulare Feststoff wirkt als Filter, so dass insbesondere entstehender Wasserstoff, aber auch andere Gase, weitgehend frei von Kohlenstoffpartikeln aus der ersten Reaktionszone abgezogen und beispielsweise in die zweite Reaktionszone geführt werden können. Kohlenstoff, der trotz der beschriebenen Filterwirkung in die zweite Reaktionszone gelangt, reagiert mit dem dort vorhandenen Sauerstoff zu einem Kohlenstoffoxid, das direkt oder nach Reverser Wassergas-Shift einen Teil des Synthesegases bildet.

Vorzugsweise wird der granulare Feststoff als Wanderbett durch die erste Reaktionszone geführt, wobei der umzusetzende Kohlenwasserstoff zweckmäßigerweise im Gegenstrom zum Granulat geleitet wird. Die erste Reaktionszone ist hierfür sinnvollerweise in einem als senkrechter Schacht ausgeführten Reaktionsraum angeordnet, so dass die Bewegung des Wanderbetts alleine unter Wirkung der Schwerkraft zustande kommt. Der granulare Feststoff kann jedoch auch als Wirbelbett durch die erste Reaktionszone geführt werden. Beide Varianten erlauben eine kontinuierliche oder quasi-kontinuierliche Betriebsweise.

Vorteilhafterweise werden auch die in der zweiten Reaktionszone ablaufenden Reaktionen in Gegenwart eines granularen Feststoffs durchgeführt, der vorzugsweise als Wanderbett durch die Reaktionszone geführt wird. Bevorzugt werden die erste und die zweite Reaktionszone über ein aus granularem Feststoff bestehendes Wanderbett verbunden, das beide Reaktionszonen vollständig umfasst und das sich von der zweiten zur ersten Reaktionszone bewegt. Die beiden Reaktionszonen sind hierfür sinnvollerweise gemeinsam in einem als senkrechter Schacht ausgeführten Reaktionsraum übereinander angeordnet, so dass die Bewegung des Wanderbetts alleine unter Wirkung der Schwerkraft zustande kommt. Die Verbindung der beiden Reaktionszonen über das Wanderbett erlaubt es, den granularen Feststoff als Wärmeträger einzusetzen, mit dem Wärme von der zweiten in die erste Reaktionszone transportiert wird.

Wird der granulare Feststoff als Wanderbett durch die beiden Reaktionszonen geführt, so sieht eine weitere bevorzugte Variante des erfindungsgemäßen Verfahrens vor, dass der Feststoff mit Umgebungstemperatur in den Reaktionsraum eingeleitet, dort zunächst bis auf die Maximaltemperatur der zweiten Reaktionszone aufgeheizt und anschließend in die erste Reaktionszone überführt wird, wo er einen Teil seiner Wärme für die dort ablaufenden Reaktionen zur Verfügung stellt und dabei abgekühlt wird. Nach dem Verlassen der ersten Reaktionszone erfolgt eine weitere Abkühlung, die zweckmäßig bis in die Nähe der Umgebungstemperatur durchgeführt wird, so dass eine Kühlung bzw. Löschung des aus dem Reaktionsraum abgezogenen granularen Feststoffs nicht erforderlich ist. Zur Ausbildung und Aufrechterhaltung des beschriebenen Temperaturprofils wird vorgeschlagen, ein Kohlenwasserstoff enthaltendes Gasgemisch mit Umgebungstemperatur in den Reaktionsraum einzuleiten und im Gegenstrom durch das Wanderbett zu führen. Auf seinem Weg durch den Reaktionsraum tauscht das Gasgemisch in direktem Kontakt mit dem Wanderbett Wärme aus, wobei das Gasgemisch bis zum Erreichen der ersten Reaktionszone auf mehr als 1200°C aufgeheizt und das Wanderbett gleichzeitig abgekühlt wird. Aus der ersten Reaktionszone abströmendes Gas wird weiter im Gegenstrom durch das Wanderbett zur zweiten Reaktionszone geführt und in direktem Wärmetausch mit diesem aufgeheizt. Die aus der zweiten Reaktionszone abströmenden heißen Gase werden in direktem Wärmetausch gegen das Wanderbett abgekühlt, so dass sie mit einer Temperatur zwischen 50 und 500°C aus dem Reaktionsraum abgezogen werden können.

Zur Durchführung des erfindungsgemäßen Verfahrens kann als granularer Feststoff ein aus Korund (Al₂O₃) oder Quarzglas (SiO₂) oder Mullit (Al₂O₃·SiO₂) oder Cordierit ((Mg,Fe)₂(Al₂Si)[Al₂Si₄O₁₈]) oder Steatit (SiO₂·MgO·Al₂O₃) bestehendes Granulat eingesetzt werden. Vorzugsweise wird jedoch ein kohlenstoffreiches Granulat eingesetzt, das aus festen, ganz oder zum überwiegenden Teil aus Kohlenstoff bestehenden Körnern gebildet ist, die in einer Körnung von 0,5 bis 80 mm, bevorzugt jedoch von 1 bis 50 mm vorliegen. Ein derartiges Granulat kann beispielsweise ganz oder teilweise aus Koksgrus bestehen, der sich aufgrund seiner kleinen Körnung nicht für den Einsatz im Hochofen eignet. Vorstellbar sind aber auch Granulate, die ganz oder teilweise aus geringwertigem Kokereikoks auf Braun- oder Steinkohlebasis und/oder aus Koks bestehen, der aus Biomasse gewonnen wird. Vorzugsweise besteht das Granulat aus Kohlenstoff, der im Verfahren durch thermische Kohlenwasserstoffzersetzung erzeugt und im Kreislauf geführt wird.

Das erfindungsgemäße Verfahren ermöglicht es, Synthesegas aus Kohlenwasserstoffen, insbesondere aus Methan, ohne oder mit sehr geringer Freisetzung von Kohlendioxid in die Atmosphäre herzustellen. Gleichzeitig erlaubt es das Verfahren, bestehende oder neu zu errichtende Stein- und Braunkohlekraftwerke weitgehend ohne einen Ausstoß von Schadstoffen zu betreiben, was deren Akzeptanz in der Bevölkerung erheblich steigern dürfte. Darüber hinaus kann ein Stein- und Braunkohlekraftwerke wesentlich flexibler eingesetzt werden, als dies nach dem Stand der Technik möglich ist, nach dem es lediglich zur Deckung der Grundlast an elektrischer Energie dient, da es mit konstanter Leistung betrieben und nicht ins öffentliche Stromnetz absetzbare elektrische Energie für die Synthesegaserzeugung genutzt werden kann.

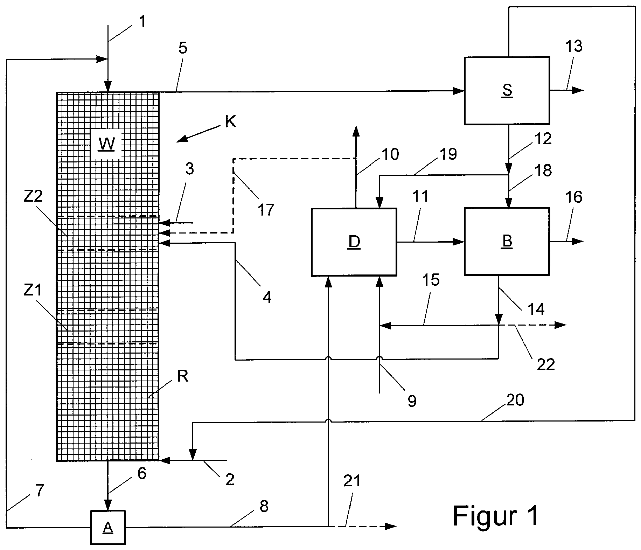

Im Folgenden soll die Erfindung anhand eines in der **Figur 1** schematisch dargestellten Ausführungsbeispiels näher erläutert werden.

Die Figur 1 zeigt eine bevorzugte Ausgestaltung des erfindungsgemäßen Verfahrens, bei der zur Synthesegaserzeugung ein Reaktor eingesetzt wird, durch dessen Reaktionsraum ein Wanderbett aus einem granularen Feststoff geführt wird, das eine erste und eine zweite Reaktionszone umfasst.

Über die Zuführung 1 wird ein granularer Feststoff, bei dem es sich beispielsweise um im Verfahren durch thermische Kohlenwasserstoffzersetzung erzeugten Kohlenstoff handelt, mit Umgebungstemperatur von oben in den Reaktionsraum R des Reaktors K eingeleitet, durch den es nachfolgend unter Wirkung der Schwerkraft in einem Wanderbett W nach unten geführt wird. Ein Kohlenwasserstoff enthaltendes Einsatzgas 2, bei dem es sich vorzugsweise um Erdgas handelt, wird gleichzeitig von unten in den Reaktionsraum R geleitet und im Gegenstrom durch das Wanderbett W nach oben geführt. Das Einsatzgas 2, das bei seinem Eintritt in den Reaktionsraum R Umgebungstemperatur aufweist, wird auf seinem Weg nach oben in direktem Wärmetausch mit dem Wanderbett W aufgeheizt, bis es in der ersten Reaktionszone Z1 die Zersetzungstemperatur des Kohlenwasserstoffs erreicht, der unter diesen Bedingungen in einer endothermen Reaktion in Wasserstoff und Kohlenstoff zerfällt. Der hierbei gebildete Kohlenstoff lagert sich zum überwiegenden Teil an den granularen Feststoff des Wanderbetts W an. Zusammen mit nicht oder nur zum Teil umgesetztem Kohlenwasserstoff strömt der gebildete heiße Wasserstoff in die oberhalb der ersten angeordnete zweite Reaktionszone Z2, wobei er in direktem Wärmetausch mit dem Wanderbett W weiter aufgeheizt wird. In der zweiten Reaktionszone Z2 wird ein Teil des Wasserstoffs mit Sauerstoff verbrannt, der über Leitung 3 zugeführt wird, und liefert so die für die Synthesegaserzeugung erforderliche Reaktionswärme. Alternativ oder zusätzlich kann die Reaktionswärme auch über elektrischen Strom 17 in die zweite Reaktionszone Z2 eingebracht werden. Zumindest ein Teil des Wasserstoffs wird mit über Leitung 4 zugeführtem Kohlendioxid zu Wasserstoff und Kohlenmonoxid umgesetzt. Nicht oder nicht vollständig in der ersten Reaktionszone Z1 zersetzter Kohlenwasserstoff wird in der zweiten Reaktionszone Z2 mit Wasser zu Wasserstoff und Kohlenmonoxid reformiert, so dass ein Synthesegas aus der zweiten Reaktionszone Z2 abströmt, das im Gegenstrom zum Wanderbett W abgekühlt und über Leitung 5 mit einer Temperatur von ca. 50 bis 500°C am oberen Ende des Reaktors K abgezogen wird. Nachfolgend wird das Synthesegas 5 der Syntheseeinrichtung S zugeführt, wo es zu Produkten 13, wie Methanol, Dimethylether oder Kohlenwasserstoffen, umgesetzt wird. Ein evtl. in der Syntheseeinrichtung S anfallendes Kohlenwasserstoffe enthaltendes Restgas 20 wird in den Reaktor K zurückgeführt, um die Kohlenwasserstoffe ebenfalls thermisch zu zersetzen.

Am unteren Ende des Reaktors K wird granularer Feststoff 6 mit einer nahe der Umgebungstemperatur liegenden Temperatur abgezogen und einer Aufbereitungseinrichtung A zugeführt, um ihn durch Abtrennung des in der ersten Reaktionszone Z1 angelagerten Kohlenstoffs aufzubereiten und anschließend über Leitung 7 wieder in den Reaktionsraum R zurückzuführen. Der abgetrennte Kohlenstoff 8 wird dem Kraftwerk D zugeführt, wo er mit einem Oxidationsmittel 9, bei dem es sich um Luft oder um mit Sauerstoff angereicherte Luft oder um technisch reinen Sauerstoff handelt, zur Produktion von Strom 10 verbrannt wird, von dem je nach Bedarf zwischen 0 und 100% in das öffentliche Netz eingespeist werden. Nicht in das öffentliche Netz eingespeister Strom 17 wird zur Bereitstellung von Reaktionswärme für die in der zweiten Reaktionszone Z2 ablaufenden Reaktionen eingesetzt. Zur Abtrennung von Kohlendioxid wird das bei der Verbrennung entstehende kohlendioxidhaltige Rauchgas 11 einer Abtrenneinrichtung B zugeführt, bei der es sich beispielsweise um eine Aminwäsche handelt, für deren Betrieb ein Teil 18 der Abwärme 12 aus der Syntheseeinrichtung S herangeführt wird. Ein anderer Teil 19 der Abwärme 12 wird dem Kraftwerk D zugeleitet, wo er zur Dampferzeugung für die Stromproduktion genutzt wird. Ein Teil 4 des abgetrennten Kohlendioxids 14 wird nachfolgend in die zweite Reaktionszone Z2 geführt, während der Rest 15 dem Oxidationsmittel 9 zugemischt wird, so dass ein evt. anfallendes Restgas 16 weitgehend kohledioxidfrei an die Atmosphäre abgegeben werden kann.

Abhängig von der Art, wie die für die Synthesegaserzeugung benötigte thermische Energie bereitgestellt wird, ergeben sich unterschiedliche Stoffbilanzen. Um aber sowohl die thermische Kohlenstoffzersetzung als auch die Oxidation des Kohlenstoffs 8 und die Wäsche des dabei erzeugten kohlendioxidhaltigen Gasgemisches 11 stets unter gleichbleibenden Bedingungen betreiben zu können, wird vorgeschlagen, temporär nicht verwertbaren Kohlenstoff 21 und nicht verwertbares Kohlendioxid 22 zwischenzuspeichern und bei Bedarf dem Prozess wieder zuzuführen. Vorzugsweise wird Kohlendioxid 22 hierbei in flüssiger Form zwischengespeichert.

## Patentansprüche

1. Verfahren zur Erzeugung von Synthesegas (5), bei dem aus Kohlenwasserstoff (2) durch thermische Zersetzung Kohlenstoff und Wasserstoff erhalten werden, wobei zumindest ein Teil des erhaltenen Kohlenstoffs (8) oxidiert und zumindest ein Teil des erhaltenen Wasserstoffs mit Kohlendioxid (4) durch Reverse Wassergas-Shift zu Kohlenmonoxid und Wasser umgesetzt wird, **dadurch gekennzeichnet, dass** durch die thermische Kohlenwasserstoffzersetzung erhaltener Kohlenstoff (8) in einem Kraftwerksprozess (D) als Brennstoff verwendet wird, um elektrischen Strom (17) zu produzieren, und bei der Verbrennung des Kohlenstoffs (8) entstehendes Kohlendioxid (4) in der Reversen Wassergas-Shift eingesetzt wird, wobei erzeugtes Synthesegas (5) zu Methanol und/oder Dimethylether und/oder Kohlenwasserstoffen (13) umgesetzt wird und die bei der Umsetzung von Synthesegas anfallende Abwärme (12) bei der Aufbereitung (B) von Kohlendioxid für die Reverse Wassergas-Shift eingesetzt wird.

2. Verfahren nach Anspruch 1, **dadurch gekennzeichnet, dass** für die Synthesegaserzeugung benötigte thermische Energie durch Oxidation von Wasserstoff und/oder durch elektrischen Strom (17) erzeugt wird.

3. Verfahren nach einem der Ansprüche 1 oder 2, **dadurch gekennzeichnet, dass** die thermische Kohlenwasserstoffzersetzung in einer ersten Reaktionszone (Z1) durchgeführt und dabei entstehender Wasserstoff aus der ersten Reaktionszone (Z1) in eine zweite Reaktionszone (Z2) geleitet wird, um dort mit Kohlendioxid zu Wasser und Kohlenmonoxid umgesetzt zu werden.

4. Verfahren nach Anspruch 3, **dadurch gekennzeichnet, dass** für die thermische Kohlenwasserstoffzersetzung in der ersten Reaktionszone (Z1) benötigte Energie aus der zweiten Reaktionszone (Z2) zugeführt wird.

5. Verfahren nach einem der Ansprüche 3 oder 4, **dadurch gekennzeichnet, dass** in der ersten Reaktionszone (Z1) nicht oder nicht vollständig zersetzter Kohlenwasserstoff in die zweite Reaktionszone (Z2) geleitet und dort mit Wasser zu Wasserstoff und Kohlendioxid umgesetzt wird.

6. Verfahren nach einem der Ansprüche 3 bis 5, **dadurch gekennzeichnet, dass** die beiden Reaktionszonen (Z1, Z2) über ein aus granularem Feststoff bestehendes Wanderbett (W) verbunden sind, das sich von der zweiten (Z2) zur ersten Reaktionszone (Z1) bewegt.

7. Verfahren nach Anspruch 6, **dadurch gekennzeichnet, dass** aus der zweiten Reaktionszone (Z2) austretendes Gas im Gegenstrom zu dem Wanderbett (W) geführt und dabei in direktem Wärmetausch mit diesem abgekühlt wird.

8. Verfahren nach einem der Ansprüche 6 oder 7, **dadurch gekennzeichnet, dass** der Kohlenwasserstoff (1) im Gegenstrom zu dem Wanderbett (W) in die erste Reaktionszone (Z1) geführt und dabei in direktem Wärmetausch mit diesem aufgeheizt wird.

9. Verfahren nach einem der Ansprüche 6 bis 8, **dadurch gekennzeichnet, dass** auf dem granularen Feststoff abgeschiedener Kohlenstoff stromabwärts der ersten Reaktionszone (Z1) abgetrennt (A) und aus dem Wanderbett (W) entnommen wird.

10. Verfahren nach einem der Ansprüche 6 bis 9, **dadurch gekennzeichnet, dass** als granularer Feststoff Korund (Al₂O₃) oder Quarzglas (SiO₂) oder Mullit (Al₂O₃·SiO₂) oder Cordierit ((Mg,Fe)₂(Al₂Si)[Al₂Si₄O₁₈]) oder Steatit (SiO₂·MgO·Al₂O₃) oder Kohle oder Koks oder im Verfahren durch thermische Kohlenwasserstoffzersetzung erzeugter Kohlenstoff eingesetzt wird.

## Claims

1. A process for producing synthesis gas (5), in which carbon and hydrogen are obtained from hydrocarbon (2) by thermal decomposition, by oxidizing at least a portion of the carbon (8) obtained and reacting at least a portion of the hydrogen obtained with carbon dioxide (4) by a reverse water-gas shift to give carbon monoxide and water, wherein carbon (8) obtained by the thermal hydrocarbon decomposition is used as fuel in a power plant operation (D) in order to produce electrical power (17), and carbon dioxide (4) formed in the combustion of the carbon (8) is used in the reverse water-gas shift, wherein synthesis gas (5) produced is converted to methanol and/or dimethyl ether and/or hydrocarbons (13) and the waste heat (12) that arises in the conversion of synthesis gas is used in the processing (B) of carbon dioxide for the reverse water-gas shift.

2. The process according to claim 1, wherein thermal energy required for the synthesis gas production is generated by oxidation of hydrogen and/or by means of electrical power (17).

3. The process according to either of claims 1 and 2, wherein the thermal hydrocarbon decomposition is performed in a first reaction zone (Z1) and hydrogen formed therein is conducted from the first reaction zone (Z1) into a second reaction zone (Z2) in order to be reacted therein with carbon dioxide to give water and carbon monoxide.

4. The process according to claim 3, wherein energy required for the thermal hydrocarbon decomposition in the first reaction zone (Z1) is supplied from the second reaction zone (Z2).

5. The process according to either of claims 3 and 4, wherein hydrocarbon undecomposed or incompletely decomposed in the first reaction zone (Z1) is conducted into the second reaction zone (Z2) and reacted therein with water to give hydrogen and carbon dioxide.

6. The process according to any of claims 3 to 5, wherein the two reaction zones (Z1, Z2) are connected by means of a moving bed (W) which consists of solid granular material and is moved from the second reaction zone (Z2) to the first reaction zone (Z1).

7. The process according to claim 6, wherein gas leaving the second reaction zone (Z2) is conducted in countercurrent to the moving bed (W) and is cooled down in direct heat exchange therewith.

8. The process according to either of claims 6 and 7, wherein the hydrocarbon (1) is conducted into the first reaction zone (Z1) in countercurrent to the moving bed (W) and is heated up in direct heat exchange therewith.

9. The process according to any of claims 6 to 8, wherein carbon deposited on the solid granular material is separated (A) downstream of the first reaction zone (Z1) and removed from the moving bed (W).

10. The process according to any of claims 6 to 9, wherein solid granular materials used are corundum (Al₂O₃) or quartz glass (SiO₂) or mullite (Al₂O₃·SiO₂) or cordierite ((Mg,Fe)₂(Al₂Si)[Al₂Si₄O₁₈]) or steatite (SiO₂·MgO·Al₂O₃) or coal or coke or carbon produced in the process by thermal hydrocarbon decomposition.

## Revendications

1. Procédé de génération d'un gaz de synthèse (5), selon lequel du carbone et de l'hydrogène sont obtenus à partir d'un hydrocarbure (2) par décomposition thermique, au moins une partie du carbone obtenu (8) étant oxydé et au moins une partie de l'hydrogène obtenu étant transformé en monoxyde de carbone et eau avec du dioxyde de carbone (4) par réaction du gaz à l'eau inverse, **caractérisé en ce que** le carbone (8) obtenu par la décomposition thermique de l'hydrocarbure est utilisé dans un procédé de centrale électrique (D) en tant que combustible afin de produire un courant électrique (17), et le dioxyde de carbone (4) formé lors de la combustion du carbone (8) est utilisé dans la réaction du gaz à l'eau inverse, le gaz de synthèse généré (5) étant transformé en méthanol et/ou en éther diméthylique et/ou en hydrocarbures (13) et la chaleur résiduaire (12) formée lors de la mise en réaction du gaz de synthèse étant utilisée lors de la préparation (B) de dioxyde de carbone pour la réaction du gaz à l'eau inverse.

2. Procédé selon la revendication 1, **caractérisé en ce que** l'énergie thermique nécessaire pour la génération de gaz de synthèse est générée par oxydation d'hydrogène et/ou par un courant électrique (17).

3. Procédé selon l'une quelconque des revendications 1 et 2, **caractérisé en ce que** la décomposition thermique de l'hydrocarbure est réalisée dans une première zone de réaction (Z1) et l'hydrogène formé lors de cette décomposition est conduit depuis la première zone de réaction (Z1) dans une seconde zone de réaction (Z2) afin d'y être transformé en eau et monoxyde de carbone avec du dioxyde de carbone.

4. Procédé selon la revendication 3, **caractérisé en ce que** l'énergie nécessaire pour la décomposition thermique de l'hydrocarbure dans la première zone de réaction (Z1) est introduite à partir de la seconde zone de réaction (Z2) .

5. Procédé selon l'une quelconque des revendications 3 et 4, **caractérisé en ce que** l'hydrocarbure non ou pas complètement décomposé dans la première zone de réaction (Z1) est conduit dans la seconde zone de réaction (Z2) et y est mis en réaction avec de l'eau pour former de l'hydrogène et du dioxyde de carbone.

6. Procédé selon l'une quelconque des revendications 3 à 5, **caractérisé en ce que** les deux zones de réaction (Z1, Z2) sont reliées par un lit mobile (W) constitué d'un solide granulaire, qui se déplace de la seconde zone de réaction (Z2) vers la première (Z1).

7. Procédé selon la revendication 6, **caractérisé en ce que** le gaz sortant de la seconde zone de réaction (Z2) est mis en circulation à contre-courant du lit mobile (W) et ainsi refroidi par échange de chaleur direct avec celui-ci.

8. Procédé selon l'une quelconque des revendications 6 ou 7, **caractérisé en ce que** l'hydrocarbure (1) est mis en circulation à contre-courant du lit mobile (W) dans la première zone de réaction (Z1) et ainsi chauffé par échange de chaleur direct avec celui-ci.

9. Procédé selon l'une quelconque des revendications 6 à 8, **caractérisé en ce que** le carbone déposé sur le solide granulaire est séparé (A) en aval de la première zone de réaction (Z1) et soutiré du lit mobile (W).

10. Procédé selon l'une quelconque des revendications 6 à 9, **caractérisé en ce que** du corindon (Al₂O₃) ou du verre de quartz (SiO₂) ou de la mullite (Al₂O₃·SiO₂) ou de la cordiérite ((Mg, Fe)₂(Al₂Si)[Al₂Si₄O₁₈]) ou de la stéatite (SiO₂·MgO·Al₂O₃) ou du charbon ou du coke ou le carbone généré dans le procédé par décomposition thermique d'un hydrocarbure est utilisé en tant que solide granulaire.
